# EUROPEAN PATENT SPECIFICATION

(11) **EP 3 219 285 B1**
(45) Date of publication and mention of the grant of the patent: **21.08.2019**
(21) Application number: 14906046.9
(22) Date of filing: 10.11.2014
(51) Int. Cl.: A61C 7/14, A61C 7/00

(54) **CUSTOMIZED LINGUAL ORTHODONTIC BRACKET AND MANUFACTURING METHOD THEREOF**
ANGEPASSTE LINGUALE KIEFERORTHOPÄDISCHE KLAMMER SOWIE HERSTELLUNGSVERFAHREN DAFÜR
BRACKET ORTHODONTIQUE LINGUAL PERSONNALISÉ ET SON PROCÉDÉ DE FABRICATION

(43) Date of publication of application: 20.09.2017
(73) Proprietor: Guangzhou Riton Biomaterial Co., Ltd., Guangzhou, Guangdong 510006 (CN)
(72) Inventor: HUANG, Weihong, Guangzhou Guangdong 510006 (CN); WANG, Jun, Guangzhou Guangdong 510006 (CN); FU, Shanmin, Guangzhou Guangdong 510006 (CN); ZHONG, Tingjin, Guangzhou Guangdong 510006 (CN); LI, Zu'an, Guangzhou Guangdong 510006 (CN); WANG, Hongwei, Guangzhou Guangdong 510006 (CN)
(74) Representative: Bergmeier, Werner
(86) International application number: PCT/CN2014/090697
(87) International publication number: WO 2016/074122

(56) References cited:
- EP-A1- 2 724 685
- CN-A- 1 681 449
- CN-A- 102 113 916
- CN-A- 104 382 660
- CN-Y- 201 223 458
- KR-B1- 100 991 835

## Description

### FIELD OF THE INVENTION

The invention relates to the technical field of oral orthodontic appliances, in particular to a tongue-side orthodontic bracket and a manufacturing method thereof.

### BACKGROUND OF THE INVENTION

Orthodontic treatment is a process of arranging abnormal teeth tidy by utilizing an orthodontic arch wire to apply force to an orthodontic bracket adhered on the teeth. With the improvement of the living standard, the demands of people of pursuing beauty become stronger and stronger, and more and more adult patients also hope to receive the orthodontic treatment. However, the common lip-side orthodontic technology needs to adhere the bracket on the lip side of the teeth of a patient. As adult patients, due to demands for social interaction and high requirements on aesthetics, many patients cannot accept to wear lip-side brackets. The appearance of a tongue-side orthodontic technology solves such problem well. The bracket used by the tongue-side orthodontic technology is not adhered on the lip side of the teeth, but is adhered on the tongue side of the teeth, so that other people are very difficult to find the wearer undergoing the orthodontic treatment.

At present, common tongue-side brackets on the market can be roughly divided into two major categories: one category is tongue-side brackets which are manufactured in a standardized manner, data contained in a groove of such bracket includes dental twisting, dental torque, dental inclination and the like which are designed on the basis of average data of a certain number of teeth with natural normal tooth arrangement, namely bracket at each tooth position of different patients uses the same data for orthodontics, such standardized bracket obviously has the problems of insufficient orthodontic precision, low orthodontic efficiency and the like, and the comfort of the patient is very poor, and even pronunciation is affected; and the other category is customized tongue-side brackets, for such bracket, a bottom plate of the bracket is designed separately according to the situation of tongue-side surfaces of teeth of each patient alone, designing the bottom plate is generally performed in a computer, a thin slice with basically uniform thickness, which is fitted to the tooth surface, is combined by migration of the data of the tooth surface, then the groove of the bracket and an upper wing and a lower wing which are convenient to be bound are assembled in a virtual environment, the entity bracket is finally manufactured through a 3D printing way. Compared with the tongue-side brackets manufactured in the standardized manner, such brackets effectively improve the orthodontic efficiency, improve the comfort of the patient to a certain extent and will not affect pronunciation of the patients at least in most cases, but the precision of the groove of the bracket which is obtained by 3D printing is currently poorer than that of the bracket which is manufactured in the standardized manner, and the error is generally above 30µm.

However, the tongue-side brackets on the current market still have the following defects: firstly, the existing tongue-side brackets have low wearing comfort, the existing tongue-side brackets all have more or less stimulus to the tongue, particularly in the adaptation time of early one to two weeks during the use of an orthodontic appliance, the patients will be very unwell, not only the diet, but also the sleep is affected; secondly, the existing tongue-side brackets have poor control effect to the dental inclination in the movement process of the teeth, in particular to the inclination of the sharp teeth, at present, the tongue-side brackets are generally designed to provide double grooves on traction hooks, so that on one hand, the manufacturing cost is greatly increased, on the other hand, the comfort of the patients is obviously reduced and the difficulty in operation of doctors is also increased; thirdly, compared with the lip-side brackets, the orthodontic efficiency of the existing tongue-side brackets is still lower, since the dental arch on tongue-side is shorter relative to the lip side, according to the existing design and production mode, if the groove of the bracket is designed to be too narrow, then the length of an arch wire matched with the groove correspondingly will be shorter, the control to the teeth will be also weakened, and if the groove of the bracket is designed to be too wide, then the length of the arch wire matched with the groove will be wider, but the length of the arch wire between the bracket each other may be reduced, the elasticity of the arch wire may be greatly reduced and the orthodontic efficiency is also affected; and fourthly, compared with the precision of the groove of the bracket which is manufactured in the standardized manner, the precision of the groove of the customized tongue-side orthodontic appliance is still relatively low due to the level of manufacturing process, and for a DLP (Digital Light Processing) rapid curing molding technology with relatively high molding efficiency, when cured in the groove region, the formed diffuse reflection of projection light greatly affects the precision of the groove. In addition, if a selective manufacturing way is adopted, the production cost will be still increased and the production period will be lengthened.

EP 2 724 685 A1 discloses a customized tongue-side orthodontic bracket according to the preambles of the independent claims. The distance of the wires to the teeth is relatively high, which reduces the comfort of the patients and the orthodontic forces cannot easily be controlled by adjusting the elasticity of the arch wire in respect of the brackets.

### SUMMARY OF THE INVENTION

The invention aims at providing a customized tongue-side orthodontic bracket and a manufacturing method thereof, so as to solve the problems of low comfort, difficulty in control of inclination, low orthodontic efficiency and the like of existing tongue-side brackets.

The technical solution adopted for solving the above technical problems is as follows: a customized tongue-side orthodontic bracket, comprising a spherical-crown shaped bracket body defined by a tooth-directional surface and a tongue-directional surface, wherein the tooth-directional surface of the bracket body is fitted to a tongue-side surface of tooth, the tongue-directional surface of the bracket body is a circular arc surface, the middle area of the tongue-directional surface of the bracket body is sunken to form a sunken portion, there are an upper wing and a lower wing separately disposed on the bracket body within the sunken portion and extending in a gum-jaw direction, with a groove disposed between the upper wing and lower wing in a mesiodistal direction, and an arc-shaped outline is maintained between the tongue-directional surface of the bracket body and the outer surfaces of the upper wing and lower wing.

According to the invention, on the two sides of the tongue-directional surface of the bracket body, there are extending grooves separately sunken and aligning with the groove, the extending grooves are formed by mutually perpendicular bottom walls and side walls, the bottom wall of the extending groove and the bottom surface of the groove are located on a common plane, and the side wall of the extending groove and the side surface of the groove are located on a common plane.

Further, between the groove and the extending grooves located on the two sides, there is a small gap.

Further, the upper wing is bent, the area between the lower surface of the upper wing and the bottom surface of the sunken portion form a semi-closed clamping mount, two side areas of the tongue-directional surface of the bracket body are sunken inwardly to form semi-closed depressions separately corresponding to the semi-closed clamping mount, the semi-closed clamping mount and the semi-closed depressions are in opposite directions, and thus a cycle channel is formed along the semi-closed clamping mount and the semi-closed depressions, which acts as an assisting groove.

Further, the groove is defined by the walls of the upper wing and lower wing together, there is a depression provided on the bracket body, the lower wing has a boss corresponding to the depression, and through the fitted meeting of the boss and depression, the lower wing is fitted onto the bracket body movably.

Further, the tooth-directional surface of the bracket body is arranged with a net bottom structure.

A technical solution adopted for solving the above technical problems is as follows: a method for manufacturing a customized tongue-side orthodontic bracket, comprising the following steps:
(1) establishing a virtual bracket in a computer, the virtual bracket comprising a spherical-crown shaped bracket body defined by a tooth-directional surface and a tongue-directional surface together, the middle area of the tongue-directional surface of the bracket body being sunken inwardly to form a sunken portion, there being an upper wing and a lower wing separately disposed on the bracket body within the sunken portion and extending in a gum-jaw direction, and a central line being disposed between the upper wing and lower wing;
(2) obtaining tooth data of a patient and creating an original model of the patient's original tooth arrangement;
(3) performing a tooth arrangement test on the original model of the original tooth arrangement, and obtaining a tooth arrangement model with an ideal tooth arrangement scenario;
(4) establishing a tooth arrangement model of the above ideal tooth arrangement scenario in a computer, and determining the groove plane of the tooth arrangement model with the ideal tooth arrangement scenario;
(5) with the tongue-side forms of teeth as a basis, determining a final virtual position where the groove is located on the groove plane;
(6) matching a central line of the virtual bracket with the final virtual position where the groove is located;
(7) rotating the central line of the virtual bracket so that the slope of the tooth-directional surface of the bracket body to be consistent with the slope of the tongue-side surfaces of the teeth;
(8) adjusting the thickness of the bracket body so that the tooth-directional surface of the bracket body to be close to the tongue-side surfaces of the teeth;
(9) using a virtual arch wire model along the central line of the virtual bracket to cut out a groove on the bracket body, the groove being defined by the wall surfaces of the upper wing and the lower wing together;
(10) cutting out the lower wing of the virtual bracket body in a computer, arranging a boss on the lower wing, arranging a depression on the bracket body which is used to be inserted by and fitted with the boss, separately exporting the cutting out models of the lower wing and the bracket body;
(11) separately producing the actual models via 3D printing.

The beneficial effects are as follows: in this customized tongue-side orthodontic bracket and the manufacturing method thereof, the bracket body is designed and manufactured on the basis of an ideal tooth arrangement model of each patient, orthodontic error produced in the orthodontic process is minimal, and the orthodontic effect can be greatly improved; at the same time, as the tongue-directional surface of the whole bracket body is made to be arc-shaped, stimulus to the tongue can be greatly reduced, the comfort of the patient is increased, the existing traditional way of making the bottom plate of the bracket as thin as possible is abandoned, only an arc-shaped outline needs to be maintained along the tongue-directional surface of the bracket body and the outer surfaces of the upper and lower wing, the problem about thickness of the bottom plate of the bracket does not need to be considered too much, and in addition, the lower wing is arranged on the bracket body by adopting a movable assembly way, so that the precision of the bracket is higher. A double-groove design constituted by the groove and the assisting groove in the bracket body can improve orthodontic efficiency and can also improve the orthodontic precision.

### BRIEF DESCRIPTION OF THE DRAWINGS

The invention is further described below in conjunction with the accompanying drawings and the embodiments.
- **Fig. 1**: is a structure schematic diagram of a bracket body in an embodiment of the invention;
- **Fig. 2**: is a structure schematic diagram of the bracket body in the embodiment of the invention at another visual angle;
- **Fig. 3**: is a first side view of the bracket body in the embodiment of the invention;
- **Fig. 4**: is a second side view of the bracket body in the embodiment of the invention;
- **Fig. 5**: is a fitting schematic diagram of the bracket body and a lower wing in the embodiment of the invention;
- **Fig. 6**: is an assembling schematic diagram of the bracket body and the lower wing in the embodiment of the invention;
- **Fig. 7**: is a schematic diagram of a virtual position where the groove is located in the embodiment of the invention; and
- **Fig. 8**: is a schematic diagram of adjustment of the slope of the tooth-directional surface of the bracket body in the embodiment of the invention.

### DETAILED DESCRIPTION OF THE EMBODIMENTS

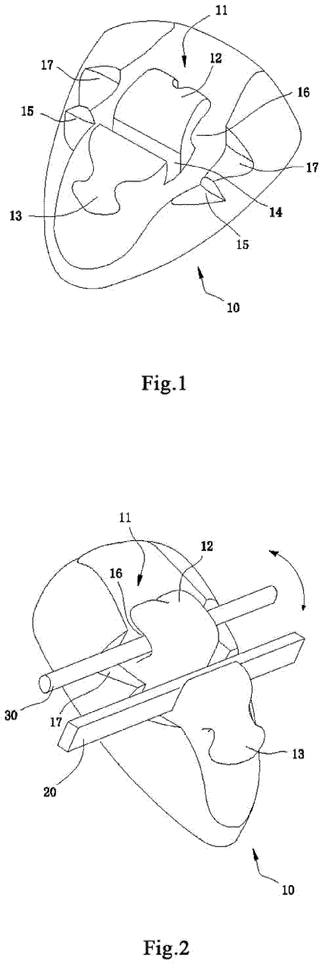

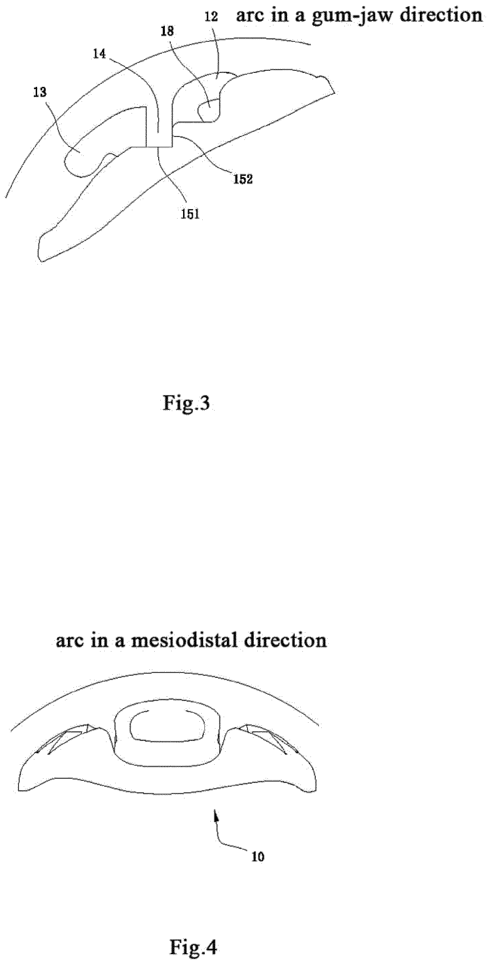

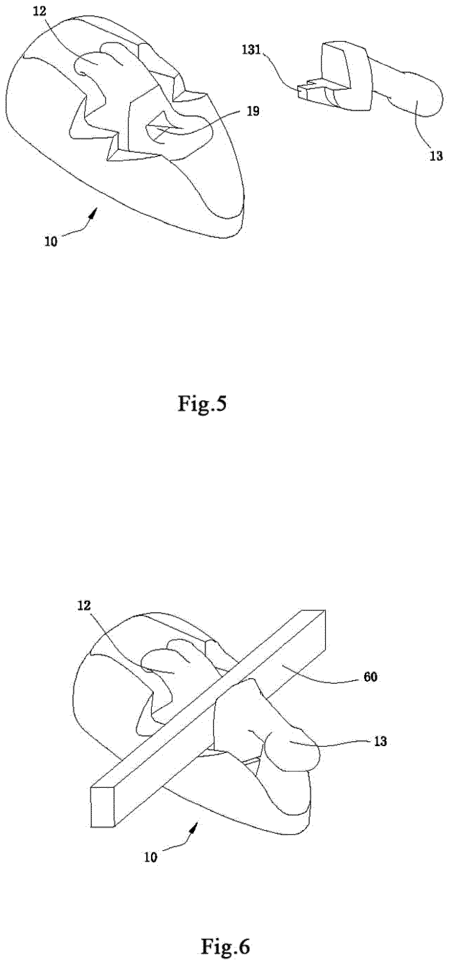

Referring to Figs. 1 to 6, a customized tongue-side orthodontic bracket of the invention comprises a spherical-crown shaped bracket body 10 defined by a tooth-directional surface and a tongue-directional surface together, wherein the tooth-directional surface of the bracket body 10 is fitted to a tongue-side surface of tooth, the tongue-directional surface of the bracket body 10 is a circular arc surface, the middle area of the tongue-directional surface of the bracket body 10 is sunken inwardly to form a sunken portion 11, there is an upper wing 12 and lower wing 13 separately disposed on the bracket body 10 within the sunken portion 11 and extending in a gum-jaw direction, with a groove 14 disposed between the upper wing 12 and the lower wing 13 in a mesiodistal direction, and an arc-shaped outline is maintained along the tongue-directional surface of the bracket body 10 and the outer surfaces of the upper wing 12 and the lower wing 13.

The tooth-directional surface of the bracket body 10 is not fully jointed with the tongue-side surface of tooth, the tooth-directional surface of the bracket body 10 is prefabricated in advance instead of being manufactured by scanning the tongue-side surfaces of each tooth of the patient, the tooth-directional surface of the bracket body 10 is prefabricated by collecting a large amount of data of tooth surfaces of the teeth of different patients and can have different shapes such as plane, arc, plane with folds and the like, in the process of mounting the bracket, a bracket body of which tooth-directional surface is closest to the tooth surface shape of the tooth is selected for each specific tooth position, although the tooth-directional surface of the bracket body 10 is not fully jointed with the shape of tooth surface of the tooth, as the tooth-directional surface of the bracket body 10 is prefabricated and unchanged, a net bottom structure in an inverted concave shape is designed on the tooth-directional surface in advance and only needs to be designed once, while the existing personalized tongue-side bracket needs to be designed respectively according to each tooth surface, and the treatment efficiency is low.

The whole tongue-directional surface of the bracket body 10 is a circular arc surface, the middle area is sunken inwardly to form the sunken portion 11, and the sunken portion 11 is used as an accommodating space for accommodating the upper wing 12 and the lower wing 13 to prevent the upper wing 12 and the lower wing 13 from protruding outwards excessively, so as to enable the whole tongue-directional surface of the bracket body 10 to still keep an arc-shaped outline, thus to reduce stimulus to the tongue caused by the bracket body 10 and ensure the comfort of the patient.

In the embodiment, the bracket body 10 adopts a double-groove design and can control the movement of the teeth better and can particularly effectively prevent the inclination during the movement of the teeth. Specifically, on the two sides of the tongue-directional surface of the bracket body 10, there are formed extending grooves 15 which are separately sunken inwardly and aligning with the groove 14, the groove 14 and the extending grooves 15 located on the two sides are connected to constitute a groove channel in a common straight line to accommodate an arch wire 20, the section of the groove 14 is rectangular, the groove 14 has a groove bottom surface and two groove side surfaces, each of the extending grooves 15 on the two sides also has a bottom wall 151 and a side wall 152, wherein the bottom walls 151 and the groove bottom surface are located on a common plane, the side walls 152 and the groove side surfaces are also located on a common plane, when the arch wire 20 is mounted in the groove 14, the arch wire 20 will also be in contact with the extending grooves 15 on the two sides, and the groove 14 and the extending grooves 15 jointly act with the arch wire 20 to perform orthodontic treatment on the teeth. Between the groove 14 and the extending grooves 15 located on the two sides there is a small gap, and the size of the small gap can be adjusted to change the size of the contact area between the arch wire 20 and the groove 14 and the extending grooves 15, so that the elasticity of the arch wire 20 can be adjusted and thus produce different orthodontic forces.

In addition, the upper wing 12 of the bracket body 10 is bent and forms a semi-closed clamping mount 16 having a "C"-shaped section with the surface of the lower sunken portion 11, and the two sides of the tongue-directional surface of the bracket body 10 are also respectively sunken inwardly to form semi-closed depressions 17 with "C"-shaped sections, and the semi-closed clamping mount 16 is opposite to the opening direction of the semi-closed depressions 17, so that a cycle channel can be formed in a common straight line by connecting the semi-closed clamping mount 16 and the semi-closed depressions 17, the cycle channel is taken as an assisting groove 18 of the bracket, and after a nickel-titanium round wire 30 is placed in the assisting groove 18, the movement of the teeth can be controlled better, and particularly the inclination during the movement of the teeth can be effectively prevented.

Preferably, there is a depression 19 provided on the bracket body 10, the lower wing 13 has a boss 131 matched to the depression 19, and through the fitted meeting of the boss 131 and depression 19, the lower wing 13 is movably installed on the bracket body 10, namely the bracket body 10 and the lower wing 13 adopt a split-type design, wherein the size of the depression 19 can be slightly larger than the size of the boss 131, the fitting assembly of the boss 131 and the pit 19 is similar to the fitting assembly of wedge-shaped structures, when the bracket body 10 and the lower wing 13 are assembled, a precise feeler gauge 60 is firstly placed between the upper wing 12 and the lower wing 13 of the bracket body 10, and then the bracket body 10 and the lower wing 13 which adopt a split-type design are spliced and assembled together to enable the size of the groove 14 to completely fit with the size of the feeler gauge 60.

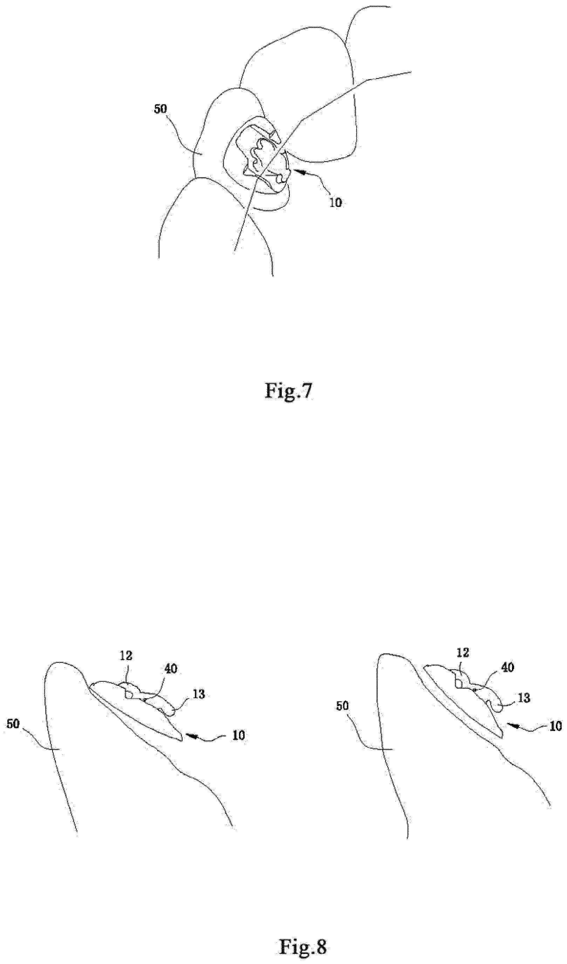

Referring to Fig. 7 and Fig. 8, the invention provides a method for manufacturing the above-mentioned customized tongue-side orthodontic bracket, comprising the following steps:
(1) establishing a virtual bracket in a computer, the virtual bracket comprising a spherical-crown shaped bracket body 10 defined by a tooth-directional surface and a tongue-directional surface together, a middle area of the tongue-directional surface of the bracket body 10 being sunken inwardly to form a sunken portion 11, there being an upper wing 12 and a lower wing 13 separately disposed on the bracket body 10 within the sunken portion 11 and extending in a gum-jaw direction, and a central line 40 being disposed between the upper wing 12 and the lower wing 13;
(2) obtaining tooth data of a patient and creating an original model of the patient's original tooth arrangement;
(3) performing a tooth arrangement test on the original model of the original tooth arrangement, and obtaining a tooth arrangement model of an ideal tooth arrangement scenario;
(4) establishing the tooth arrangement model of the ideal tooth arrangement scenario in a computer, and determining the groove plane of the tooth arrangement model of the ideal tooth arrangement scenario;
(5) with the tongue-side forms of teeth as a basis, determining a final virtual position where the groove is placed on the groove plane;
(6) matching the central line 40 of the virtual bracket with the final virtual position where the groove is placed;
(7) rotating the bracket body 10 about the central line 40 of the virtual bracket so that the slope of the tooth-directional surface of the bracket body 10 to be in alignment with the slope of the tongue-side surfaces of the teeth 50;
(8) adjusting the thickness of the bracket body 10 so that the tooth-directional surface of the bracket body 10 is close to the tongue-side surfaces of the teeth 50;
(9) using a virtual arch wire model along the central line 40 of the virtual bracket to cut out a groove 14 of the bracket body 10 on the bracket body, the groove 14 being defined by the wall surfaces of the upper wing 12 and the lower wing 13 together;
(10) cutting out the lower wing 13 of the virtual bracket body in a computer, arranging a boss 131 on the lower wing 13, arranging a depression 19 on the bracket body 10 which is used to be inserted and fitted with the boss 131, separately exporting the cutting out models of the lower wing 13 and bracket body 10;
(11) separately producing the actual models via 3D printing.

The tooth arrangement test in step c can be achieved manually or by a computer, and the finally generated entity bracket can be a metal entity bracket which is directly generated by 3D printing, and can also be a metal entity bracket which is generated firstly by printing out a resin entity bracket by 3D printing and then by casting, and the metal can be cobalt-chromium alloy, nickel-cobalt alloy, gold alloy, titanium alloy and the like.

## Claims

1. A customized tongue-side orthodontic bracket, it comprises a spherical-crown shaped bracket body (10) defined by a tooth-directional surface and a tongue-directional surface, the tooth-directional surface of the bracket body (10) being fitted to a tongue-side surface of tooth, the tongue-directional surface of the bracket body (10) being a circular arc surface, a middle area of the tongue-directional surface of the bracket body (10) being sunken inwardly to form a sunken portion (11), there being an upper wing (12) and a lower wing (13) separately disposed on the bracket body (10) within the sunken portion (11) and extending in a gum-jaw direction, with a groove (14) being disposed between the upper wing (12) and the lower wing (13) in a mesiodistal direction, and an arc-shaped outline of the tongue-directional surface of the bracket body (10) and outer surfaces of the upper wing (12) and the wing being maintained, **characterized in that**: on the two sides of the tongue-directional surface of the bracket body (10), there are extending grooves (15) disposed separately that sunken inwardly and aligning with the groove (14), the extending grooves (15) being formed by mutually perpendicular bottom walls (151) and side walls (152), the bottom wall (151) of the extending groove (15) and the bottom surface of the groove (14) being located on a common plane, and the side walls (152) of the extending grooves (15) and the side of the groove (14) being located on a common plane.

2. The customized tongue-side orthodontic bracket of claim 1, **characterized in that**: between the groove (14) and the extending grooves (15) located on the two sides there is a small gap.

3. The customized tongue-side orthodontic bracket of claim 1, **characterized in that**: the upper wing (12) is bent, an area between the lower surface of the upper wing (12) and the bottom surface of the sunken portion (11) forming a semi-closed clamping mount (16), two side areas of the tongue-directional surface of the bracket body (10) are sunken inwardly to form semi-closed depressions (17) corresponding to the semi-closed clamping mount (16), the semi-closed clamping mount (16) and the semi-closed depressions (17) being in opposite opening directions, and thus a cycle channel is formed along the semi-closed clamping mount (16) and the semi-closed depression (17), that acts as an assisting groove (18).

4. The customized tongue-side orthodontic bracket of claim 1, **characterized in that**: the groove (14) is defined by walls of the upper wing (12) and the lower wing (13) together, there being a depression (19) provided on the bracket body (10), the lower wing (13) having a boss (131) matched to the depression (19), and through the fitted meeting of the boss (131) and depression (19), the lower wing (13) being actively installed on the bracket body (10).

5. The customized tongue-side orthodontic bracket of claim 1, **characterized in that**: the tooth-directional surface of the bracket body (10) is arranged with a net bottom structure.

6. A method for manufacturing a customized tongue-side orthodontic bracket, **characterized in that**: comprising the following steps:
(1) establishing a virtual bracket in a computer, the virtual bracket comprising a spherical-crown shaped bracket body (10) defined by a tooth-directional surface and a tongue-directional surface, a middle area of the tongue-directional surface of the bracket body (10) being sunken inwardly to form a sunken portion (11), there being an upper wing (12) and a lower wing (13) separately disposed on the bracket body (10) within the sunken portion (11) and extending in a gum-jaw direction, and a central line (40) being disposed between the upper wing (12) and the lower wing (13), on the two sides of the tongue-directional surface of the bracket body (10), there are extending grooves (15) disposed separately that sunken inwardly and aligning with the groove (14), the extending grooves (15) being formed by mutually perpendicular bottom walls (151) and side walls (152), the bottom wall (151) of the extending groove (15) and the bottom surface of the groove (14) being located on a common plane, and the side walls (152) of the extending grooves (15) and the side of the groove (14) being located on a common plane;
(2) obtaining tooth data of a patient and creating an original model of the patient's original tooth arrangement;
(3) performing a tooth arrangement test on the original model of the original tooth arrangement, and obtaining a tooth arrangement model of an ideal tooth arrangement scenario;
(4) establishing the tooth arrangement model of the ideal tooth arrangement scenario in a computer, and determining the groove plane of the tooth arrangement model of the ideal tooth arrangement scenario;
(5) with the tongue-side forms of teeth as a basis, determining a final virtual position where the groove (14) and the extending grooves(15) are placed on the groove plane;
(6) matching the central line (40) of the virtual bracket with the final virtual position where the groove(14) and the extending grooves (15) are placed;
(7) rotating the bracket body (10) about the central line (40) of the virtual bracket so that the slope of the tooth-directional surface of the bracket body (10) to be in alignment with the slope of the tongue-side surfaces of the teeth (50);
(8) adjusting the thickness of the bracket body (10) so that the tooth-directional surface of the bracket body (10) is close to the tongue-side surfaces of the teeth (50);
(9) using a virtual arch wire model along the central line (40) of the virtual bracket to cut out a bracket body groove (14) and the extending grooves (15) on the bracket body (10), the groove (14) being defined by the wall surfaces of the upper wing (12) and the lower wing (13);
(10) cutting out the lower wing (13) of the virtual bracket body in a computer, arranging a boss (131) on the lower wing (13), arranging a depression (19) on the bracket body (10) which is used to be inserted by and fitted with the boss (131), separately exporting the cutting out models of the lower wing (13) and the bracket body (10);
(11) separately producing the actual models via 3D printing.

## Patentansprüche

1. Maßgefertigtes zungenseitiges kieferorthopädisches Bracket, umfassend einen Bracketkörper (10) in Form einer sphärischen Krone, gebildet aus einer zahndirektionalen Fläche und einer zungendirektionalen Fläche, wobei die zahndirektionale Fläche des Bracketkörpers (10) an eine zungenseitige Fläche des Zahns angesetzt wird, wobei die zungendirektionale Fläche des Bracketkörpers (10) eine kreisbogenförmige Fläche ist, wobei ein mittlerer Bereich der zungendirektionale Fläche des Bracketkörpers (10) nach innen gesenkt ist, um einen abgesenkten Teil (11) zu bilden, wobei ein oberer Flügel (12) und ein unterer Flügel (13) getrennt an dem Bracketkörper (10) in dem abgesenkten Teil (11) angeordnet sind und sich in einer Zahnfleisch-Kiefer-Richtung erstrecken, wobei sich eine Nut (14) zwischen dem oberen Flügel (12) und dem unteren Flügel (13) in einer mesiodistalen Richtung befindet, und ein bogenförmiger Umriss der zungendirektionalen Fläche des Bracketkörpers (10) und Außenflächen des oberen Flügels (12) und des Flügels beibehalten ist, **dadurch gekennzeichnet, dass**: sich auf den beiden Seiten der zungendirektionalen Fläche des Bracketkörpers (10) Erweiterungsnuten (15) getrennt befinden, die nach innen gesenkt sind und mit der Nut (14) ausgerichtet sind, wobei die Erweiterungsnuten (15) durch zueinander senkrechte Bodenwände (151) und Seitenwände (152) gebildet sind, wobei sich die Bodenwand (151) der Erweiterungsnut (15) und die Bodenfläche der Nut (14) auf einer gemeinsamen Ebene befinden und wobei sich die Seitenwände (152) der Erweiterungsnuten (15) und die Seite der Nut (14) auf einer gemeinsamen Ebene befinden.

2. Maßgefertigtes zungenseitiges kieferorthopädisches Bracket nach Anspruch 1, **dadurch gekennzeichnet, dass** es zwischen der Nut (14) und den an den beiden Seiten befindlichen Erweiterungsnuten (15) eine schmale Lücke gibt.

3. Maßgefertigtes zungenseitiges kieferorthopädisches Bracket nach Anspruch 1, **dadurch gekennzeichnet, dass**: der obere Flügel (12) gebogen ist, wobei ein Bereich zwischen der unteren Fläche des oberen Flügels (12) und der Bodenfläche des abgesenkten Teils (11) eine halbgeschlossene Klemmhalterung (16) bildet, zwei Seitenbereiche der zungendirektionalen Fläche des Bracketkörpers (10) nach innen gesenkt sind, um halbgeschlossene Vertiefungen (17) zu bilden, die der halbgeschlossenen Klemmhalterung (16) entsprechen, wobei die halbgeschlossene Klemmhalterung (16) und die halbgeschlossenen Vertiefungen (17) in entgegengesetzten Öffnungsrichtungen liegen und somit ein Umlaufkanal entlang der halbgeschlossenen Klemmhalterung (16) und der halbgeschlossene Vertiefung (17) gebildet ist, der als eine Hilfsnut (18) wirkt.

4. Maßgefertigtes zungenseitiges kieferorthopädisches Bracket nach Anspruch 1, **dadurch gekennzeichnet, dass**: die Nut (14) durch Wände des oberen Flügels (12) und des unteren Flügels (13) zusammen gebildet ist, wobei eine Vertiefung (19) am Bracketkörper (10) gebildet ist, der untere Flügel (13) einen zu der Vertiefung (19) passenden Vorsprung (131) aufweist und wobei durch das Zusammenpassen des Vorsprungs (131) und der Vertiefung (19) der untere Flügel (13) aktiv am Bracketkörper (10) angebaut wird.

5. Maßgefertigtes zungenseitiges kieferorthopädisches Bracket nach Anspruch 1, **dadurch gekennzeichnet, dass**: an der zahndirektionalen Fläche des Bracketkörpers (10) eine Netzbodenstruktur angeordnet ist.

6. Verfahren zum Herstellen eines maßgefertigten zungenseitigen kieferorthopädischen Brackets, **dadurch gekennzeichnet, dass**: es die folgenden Schritte umfasst:
(1) Erstellen eines virtuellen Brackets in einem Computer, wobei das virtuelle Bracket umfasst: einen Bracketkörper (10) in Form einer sphärischen Krone, ausgebildet aus einer zahndirektionalen Fläche und einer zungendirektionalen Fläche, einen mittleren Bereich der zungendirektionale Fläche des Bracketkörpers (10), der nach innen gesenkt ist, um einen abgesenkten Teil (11) zu bilden, wobei ein oberer Flügel (12) und ein unterer Flügel (13) getrennt auf dem Bracketkörper (10) in dem abgesenkten Teil (11) angeordnet sind und sich in einer Zahnfleisch-Kiefer-Richtung erstrecken, und wobei sich eine Mittellinie (40) zwischen dem oberen Flügel (12) und dem unteren Flügel (13) befindet, wobei auf den beiden Seiten der zungendirektionalen Fläche des Bracketkörpers (10) Erweiterungsnuten (15) getrennt angeordnet sind, die nach innen gesenkt sind und mit der Nut (14) ausgerichtet sind, wobei die Erweiterungsnuten (15) durch zueinander senkrechte Bodenwände (151) und Seitenwände (152) gebildet sind, wobei sich die Bodenwand (151) der Erweiterungsnut (15) und die Bodenfläche der Nut (14) auf einer gemeinsamen Ebene befinden und sich die Seitenwände (152) der Erweiterungsnuten (15) und die Seite der Nut (14) auf einer gemeinsamen Ebene befinden;
(2) Erlangen von Zahndaten eines Patienten und Erzeugen eines Originalmodells der Original-Zahnanordnung des Patienten;
(3) Durchführen eines Zahnanordnungstests am Originalmodell der Original-Zahnanordnung und Erlangen eines Zahnanordnungsmodells eines idealen Zahnanordnungsszenarios;
(4) Erstellen des Zahnanordnungsmodells des idealen Zahnanordnungsszenarios in einem Computer und Bestimmen der Nutebene des Zahnanordnungsmodells des idealen Zahnanordnungsszenarios;
(5) mit den zungenseitigen Formen von Zähnen als Grundlage Bestimmen einer endgültigen virtuellen Position, in der die Nut (14) und die Erweiterungsnuten (15) auf die Nutebene gelegt werden;
(6) Anpassen der Mittellinie (40) des virtuellen Brackets an die endgültige virtuelle Position, in der die Nut (14) und die Erweiterungsnuten (15) liegen;
(7) Drehen des Bracketkörpers (10) um die Mittellinie (40) des virtuellen Brackets, sodass die Schräge der zahndirektionalen Fläche des Bracketkörpers (10) zur Schräge der zungenseitigen Fläche der Zähne (50) ausgerichtet wird;
(8) Justieren der Dicke des Bracketkörpers (10) so, dass die zahndirektionale Fläche des Bracketkörpers (10) nahe der zungenseitigen Fläche der Zähne (50) liegt;
(9) Verwenden eines virtuellen Bogendrahtmodells entlang der Mittellinie (40) des virtuellen Brackets, um eine Bracketkörpernut (14) und die Erweiterungsnuten (15) am Bracketkörper (10) auszuschneiden, wobei die Nut (14) durch die Wandflächen des oberen Flügels (12) und des unteren Flügels (13) gebildet ist;
(10) Ausschneiden des unteren Flügels (13) des virtuellen Bracketkörpers in einem Computer, Anordnen eines Vorsprungs (131) am unteren Flügel (13), Anordnen einer Vertiefung (19) am Bracketkörper (10), die benutzt wird, um den Vorsprung (131) dort einzusetzen und einzupassen, getrenntes Exportieren der Ausschnittmodelle des unteren Flügels (13) und des Bracketkörpers (10);
(11) getrenntes Herstellen der tatsächlichen Modelle im 3D-Druck.

## Revendications

1. Support orthodontique personnalisée de côté langue, qui comprend un corps (10) de support en forme de couronne sphérique défini par une surface de direction de dent et une surface de direction de langue, la surface de direction de dent du corps (10) de support étant ajustée sur une surface de dent du côté langue, la surface de direction de langue du corps (10) de support étant une surface en arc circulaire, une zone centrale de la surface de direction de langue du corps (10) de support étant enfoncée vers l'intérieur pour former une partie enfoncée (11), une aile supérieure (12) et une aile inférieure (13) étant disposées séparément sur le corps (10) de support au sein de la partie enfoncée (11) et s'étendant dans une direction gencive-mâchoire, avec une rainure (14) qui est disposée entre l'aile supérieure (12) et l'aile inférieure (13) dans une direction médiodistale, et un contour en forme d'arc de la surface de direction de langue du corps (10) de support et des surfaces extérieures de l'aile supérieure (12) et de l'aile étant maintenus, **caractérisée en ce que** : sur les deux côtés de la surface de direction de langue du corps (10) de support, il existe des rainures d'extension (15) disposées séparément qui s'enfoncent vers l'intérieur et s'alignent avec la rainure (14), les rainures d'extension (15) étant formées par des parois de fond (151) et des parois latérales (152) mutuellement perpendiculaires, la paroi de fond (151) de la rainure d'extension (15) et la surface de fond de la rainure (14) étant situées sur un plan commun et les parois latérales (152) des rainures d'extension (15) et le côté de la rainure (14) étant situés sur un plan commun.

2. Support orthodontique personnalisée de côté langue selon la revendication 1, **caractérisée en ce que** : entre la rainure (14) et les rainures d'extension (15) situées sur les deux côtés, il existe un petit vide.

3. Support orthodontique personnalisée de côté langue selon la revendication 1, **caractérisée en ce que** : l'aile supérieure (12) est pliée, une zone entre la surface inférieure de l'aile supérieure (12) et la surface inférieure de la partie enfoncée (11) formant un support d'encliquetage (16) semi-fermé, deux zones latérales de la surface de direction de langue du corps (10) de support sont enfoncées vers l'intérieur pour former des creux semi-fermés (17) correspondant au support d'encliquetage (16) semi-fermé, le support d'encliquetage (16) semi-fermé et les creux semi-fermés (17) étant dans des directions d'ouverture opposées, et ainsi un canal de cycle est formé le long du support d'encliquetage semi-fermé (16) et du creux semi-fermé (17), qui agit en tant qu'une rainure d'assistance (18).

4. Support orthodontique personnalisée de côté langue selon la revendication 1, **caractérisée en ce que** : la rainure (14) est définie communément par des parois de l'aile supérieure (12) et de l'aile inférieure (13), une dépression (19) étant prévue sur le corps (10) de support, l'aile inférieure (13) présentant un bossage (131) correspondant à la dépression (19) et, par la conformité adaptée du bossage (131) et de la dépression (19), l'aile inférieure (13) étant installée activement sur le corps (10) de support.

5. Support orthodontique personnalisée de côté langue selon la revendication 1, **caractérisée en ce que** : la surface de direction de dent du corps (10) de support est agencée avec une structure de fond maillée.

6. Méthode pour fabriquer une support orthodontique personnalisée de côté langue, **caractérisée en ce que** : la méthode comprend les étapes suivantes :
(1) établir une support virtuelle dans un ordinateur, la support virtuelle comprenant un corps (10) de support en forme de couronne sphérique défini par une surface de direction de dent et une surface de direction de langue, une zone centrale de la surface de direction de langue du corps (10) de support étant enfoncée vers l'intérieur pour former une partie enfoncée (11), une aile supérieure (12) et une aile inférieure (13) étant disposées séparément sur le corps (10) de support au sein de la partie enfoncée (11) et s'étendant dans une direction gencive-mâchoire, et une ligne centrale (40) étant disposée entre l'aile supérieure (12) et l'aile inférieure (13), sur les deux côtés de la surface de direction de langue du corps (10) de support, il existe des rainures d'extension (15) disposées séparément qui s'enfoncent vers l'intérieur et s'alignent avec la rainure (14), les rainures d'extension (15) étant formées par des parois de fond (151) et des parois latérales (152) mutuellement perpendiculaires, la paroi de fond (151) de la rainure d'extension (15) et la surface de fond de la rainure (14) étant situées sur un plan commun et les parois latérales (152) des rainures d'extension (15) et le côté de la rainure (14) étant situés sur un plan commun ;
(2) obtenir des données dentaires d'un patient et créer un modèle original de la disposition dentaire originale du patient ;
(3) exécuter un essai de disposition dentaire sur le modèle original de la disposition dentaire originale, et obtenir un modèle de disposition dentaire d'un scénario de disposition dentaire idéal ;
(4) établir le modèle de disposition dentaire du scénario de disposition dentaire idéal dans un ordinateur, et déterminer le plan de rainure du modèle de disposition dentaire du scénario de disposition dentaire idéal ;
(5) sur la base des formes de dents du côté langue, déterminer une position virtuelle finale dans laquelle la rainure (14) et les rainures d'extension (15) sont placées sur le plan de la rainure ;
(6) faire correspondre la ligne centrale (40) de la support virtuelle avec la position virtuelle finale dans laquelle sont placées la rainure (14) et les rainures d'extension (15) ;
(7) tourner le corps (10) de support autour de la ligne centrale (40) de la support virtuelle de sorte que l'inclinaison de la surface de direction de dent du corps (10) de support soit alignée avec l'inclinaison des surfaces du côté langue des dents (50) ;
(8) régler l'épaisseur du corps (10) de support de sorte que la surface de direction de dent du corps (10) de support soit proche des surfaces de côté langue des dents (50) ;
(9) utiliser un modèle d'arc dentaire virtuel le long de la ligne centrale (40) de la support virtuelle pour découper une rainure (14) de corps de support et les rainures d'extension (15) sur le corps (10) de support, la rainure (14) étant définie par les surfaces des parois de l'aile supérieure (12) et de l'aile inférieure (13) ;
(10) découper l'aile inférieure (13) du corps de support virtuel dans un ordinateur, disposer un bossage (131) sur l'aile inférieure (13), disposer une dépression (19) sur le corps (10) de support, dépression qui est utilisée pour être pénétrée et comblée par le bossage (131), exporter séparément les modèles découpés de l'aile inférieure (13) et le corps (10) de support ;
(11) produire séparément les modèles actuels par impression tridimensionnelle.
